# EUROPEAN PATENT APPLICATION

(11) **EP 2 924 636 A1**
(43) Date of publication of application: **30.09.2015**
(21) Application number: 15150572.4
(22) Date of filing: 09.01.2015
(51) Int. Cl.: G06Q 20/08, G06Q 20/14, B60L 11/18

(54) **Billing system for electric vehicle charging**

(30) Priority: 28.03.2014 KR 20140037306; 19.05.2014 KR 20140060037
(71) Applicant: Han, Chan Hee, Gyeonggi-do (KR)
(72) Inventor: Han, Chan Hee, Gyeonggi-do (KR); Shin, Gyu Sik, Gyeonggi-do (KR)
(74) Representative: O'Connell, David Christopher

(57) **Abstract**

Disclosed herein is a billing system for electric vehicle charging, which enables optimal charging and billing, considering details associated with electric vehicle charging, such as charging quality corresponding to charging power supply states, and an estimated rate determined differently according to a charging time and a charging power quantity. The present invention has a maximum electricity quantity sensing function, a charging electricity quantity setting function based on a sensing value, and a charging condition setting function based on a power reserve rate on a basis of a time, a user, an area, and a power company, a regional power situation, and the like. Also, while continuously managing a maximum charging electricity quantity, a voltage/current fluctuation point, an electricity supplier-charging device-connection information, a fee corresponding to a charging time, and fee information corresponding to a charging electricity quantity, optimal charging and billing are performed according to charging conditions.

## Description

### BACKGROUND OF THE INVENTION

### 1. Field of the Invention

The present invention relates to a billing system for electric vehicle charging. More particularly, the present invention enables optimal charging and billing, considering details associated with electric vehicle charging, such as charging quality corresponding to charging power supply states on a basis of a building, an area, and a country where an outlet is installed, and an estimated rate determined differently according to a charging time and a charging power quantity.

### 2. Description of the Related Art

For the popularization of electric vehicles, the establishment of an electric vehicle charging infrastructure is essential.

To this end, not only charging facilities that may be provided in apartments or private residences, but also as many charging stations as possible need to be built in the right places, so that drivers can easily charge their vehicles anytime and anywhere, if it is determined that charging is necessary during long-distance driving.

There may be no problems if charging is performed using legally authorized charging stations, but if charging is performed using electricity supply means provided in an apartment or a normal house, the following problems inevitably occur.

For an apartment, for example, charging may be performed by connecting a plug (connected to an electric vehicle) to an outlet provided in a space where the electric vehicle can be parked. However, for a billing company (for example, Korea Electric Power Corporation (KEPCO)), which estimates a utility fee based on information such as a power consumption quantity and the like, it is difficult to correctly determine whether such charging (power consumption) is intended for charging of an electric vehicle or for charging of a general appliance. This same concern applies to charging using an outlet provided in a private residence.

Moreover, if such determination is not made, in a power rate system adopting a level-based progressive rate, an electric vehicle charging power quantity is added to normal household power consumption, raising a rate level, which may lead to a surge in a power rate.

Therefore, if electric vehicles are charged recklessly without solving the foregoing problems, for common-use electricity of an apartment, residents living in the apartment may be damaged, and for a private residence, a resident living in the house may be damaged.

To solve such problems, there is a need for a technique for correct charging and billing based on accurate identification of an electricity supply unit and an electricity demand unit, which are associated with electric vehicle charging.

However, it may be difficult to correctly recognize a power supply state, that is, whether charging is performed in a normal situation (for example, a rated voltage). Accordingly, a need exists for the development of a technique focusing on prevention of a charging time delay, guaranteeing of charging quality, and accurate billing based on the detailed application of various conditions (for example, weather, consumption time, and the like) considered in the electricity rate estimation.

### SUMMARY OF THE INVENTION

Accordingly, the present invention has been made to solve the above problems related to electric vehicle charging, and an object of the present invention is to provide a billing system for electric vehicle charging, by which a particular electricity supplier and an electricity rate billing target such as a charging device for charging an electric vehicle, are accurately identified to easily recognize an electricity supply unit and an electricity demand unit.

Another object of the present invention is to provide a billing system for electric vehicle charging, by which a power supply state of a building, an area, or a country where an outlet is installed is determined and charging is performed optimized for the determined power supply state.

A further object of the present invention is to provide a billing system for electric vehicle charging, by which charging is performed considering an electricity rate.

Yet another object of the present invention is to provide a billing system for electric vehicle charging, by which charging is controlled to be performed several times at predetermined time intervals.

Still another object of the present invention is to provide a billing system for electric vehicle charging, by which electric vehicle charging is remotely controlled specifically for a power supply and demand situation of a power company or other conditions (a target electric vehicle, time, a building or an area, a vehicle manufacturer, a previously-charged power quantity, and so forth).

Still another object of the present invention is to provide a billing system for electric vehicle charging, by which the temperature of an electricity supplier and the temperature of a charging slot of the electric vehicle are sensed and charging is properly controlled according to the sensed temperatures.

In order to accomplish the above object, the present invention provides a billing system for electric vehicle charging, the billing system including an electricity supplier for supplying electricity, an electric vehicle charged by a charging device, a billing server for estimating a fee separately for a normal-consumption electricity quantity and a charging electricity quantity, out of a total electricity quantity consumed through the electric supplier, an operator server for storing and managing information regarding the electricity supplier and the charging device, receiving a charging electricity quantity of the electric vehicle from the charging device and transmitting the charging electricity quantity to the billing server, receiving an estimated fee of the charging electricity quantity from the billing server and charging an owner of the charging device the estimated fee, and processing a cost with a power company, and a payment server for receiving payment of the estimated fee of the charging electricity quantity from the owner of the charging device.

The charging device may include a first connection unit electrically connected to the electricity supplier and including a temperature sensor therein, a sensing unit for sensing the electricity supplier, a measurement unit for measuring the charging electricity quantity and a supply power of the electricity supplier, a controller for controlling an operation corresponding to a charging control condition and communication with an operator server, a manipulation unit manipulated for performing an operation from start of charging to completion of charging, and a second connection unit electrically connected to the electric vehicle and including a temperature sensor therein, wherein power supplied from the power supplier is measured and a measurement value is transmitted to the operator server, and thus a charging electricity quantity is automatically set for each electricity supplier under control of the operator server.

The operator may share, with the power company, power supply and demand situation information regarding a building, an area and country where the electricity supplier is installed, and distribute the charging electricity quantity to each electricity supplier.

The electricity supplier information and the charging device information are extracted and determined by the operator server in association with a unique identifier (ID).

The operator server may include a charging electricity quantity auto setting function and a charging condition setting function, and include a maximum charging electricity quantity database (DB), a voltage fluctuation point DB, a DB of information in which the electricity supplier and the charging device are connected, a DB of a fee corresponding to a charging time and a user, and a DB of a fee corresponding to a charging electricity quantity.

The charging conditions include a charging time, a charging electricity quantity, a charge start time, charging temporary termination, a charging resume time, and a power supply situation shared between an operator and the power company.

The charging conditions are set via any one of a homepage of the operator, a smart phone, and the charging device.

The present invention also provides a billing system for electric vehicle charging, the billing system including an electricity supplier for supplying electricity, an electric vehicle charged by a charging device, a billing server for estimating a fee separately for a normal-consumption electricity quantity and a charging electricity quantity, out of a total electricity quantity consumed through the electric supplier, a charging device for storing and managing electricity supplier information and charging device information and transmitting a charging electricity quantity to an operator server and the billing server, an operator server for receiving an estimated fee of the charging electricity quantity from the billing server and charging an owner of the charging device the estimated fee, and processing a cost with a power company, and a payment company server for receiving payment of the estimated fee of the charging electricity quantity from the owner of the charging device.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a structural block diagram of a billing system for electric vehicle charging according to the present invention;
FIG. 2 is a structural block diagram of a charging device illustrated in FIG. 1;
FIG. 3 is a structural diagram of an operator server according to the present invention;
FIG. 4 is a structural diagram for setting charging conditions according to the present invention;
FIG. 5 is a flowchart illustrating billing operations for electric vehicle charging according to the present invention;
FIG. 6 is a flowchart illustrating billing operations for electric vehicle charging according to another embodiment of the present invention;
FIG. 7 is an exemplary diagram illustrating charging conditions applied to the present invention; and
FIG. 8 is a flowchart illustrating charging control operations with respect to temperature according to the present invention.

### DESCRIPTION OF THE PREFERRED EMBODIMENTS

Hereinafter, embodiments of the present invention will be described in detail with reference to the attached drawings.

Reference now should be made to the drawings, in which the same reference numerals are used throughout the different drawings to designate the same or similar components.

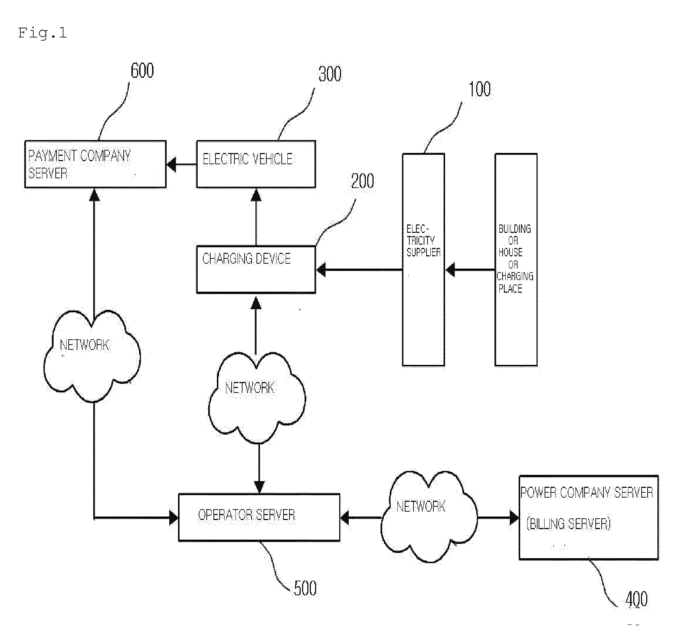

As illustrated in FIG. 1, a billing system for electric vehicle charging according to the present invention may include an electricity supplier 100 for supplying electricity; a charging device 20 for charging an electric vehicle 300 with electricity supplied from the electricity supplier 100; the electric vehicle 300 charged by the charging device 200; a billing server 400 for estimating an electricity rate based on a charging electricity quantity of the electric vehicle 300; an operator server 500 for storing and managing information of the electricity supplier 100 and the charging device 200, receiving the charging electricity quantity of the electric vehicle 300 from the charging device 200 and transferring the charging electricity quantity to the billing server 400, and receiving an estimated rate of the charging electricity quantity from the billing server 400 and charging a charging device owner for the estimated rate; and a payment server 600 for receiving payment of the estimated rate of the charging electricity quantity from the owner of the charging device 200.

The rate payment for the charging electricity quantity is not limited to a particular method such as a credit card, an apartment management expense, giro, and the like.

The charging device information may include a name, a phone number, an address, and the like, of the owner.

The electricity supplier information may include a name of a building in which the electricity supplier is installed, a name of an owner of the building, an address of the building, outlet information, information about a meter connected to the outlet, maximum charging electricity quantity information of the outlet, and the like.

The foregoing information may be recorded on, for example, a Radio Frequency (RF) card, or may be stored and managed by the operator server.

The operator server 500 determines the information in association with a unique ID given to each of the electricity supplier and the charging device. The operator server 500 and the billing server 400; the operator server 500 and the charging device 200; and the operator server 500 and the payment server 600 are connected through, for example, Wireless Fidelity (Wi-Fi), wireless communication, and power line communication (PLC), and selectively, may be interconnected wirelessly or through various communication means incurring a rate.

The electricity supplier 100 is an outlet including one or more plug connectors connected with the charging device 200 to supply external electricity supplied from, for example, a power company, to the electric vehicle 300, and may be configured in any place, such as a charging station, an apartment, a private residence, a building, and the like, without being limited to a particular place. The electricity supplier 100 may be connected to a separate meter other than a meter installed by a power company. In this case, for example, the electricity supplier 100 may be installed in a building where an independent electrical power supply is installed.

The electricity supplier 100 is given, for example, a barcode or a unique ID of an RF type, so that the outlet information, the information of the meter connected to the outlet, and the maximum charging electricity quantity information of the outlet may be read.

Thus, once the electricity supplier 100 and the electric vehicle 300 are electrically connected by the charging device 200, the unique ID of the electricity supplier 100 is sensed by the charging device 200 and information of the electricity supplier 100, the information of the meter connected to the electricity supplier 100, and the maximum electricity quantity information are determined by the operator server 500 having received the unique ID from the charging device 200. Such information determination is possible because the operator server 500 stores and manages any information of the electricity supplier.

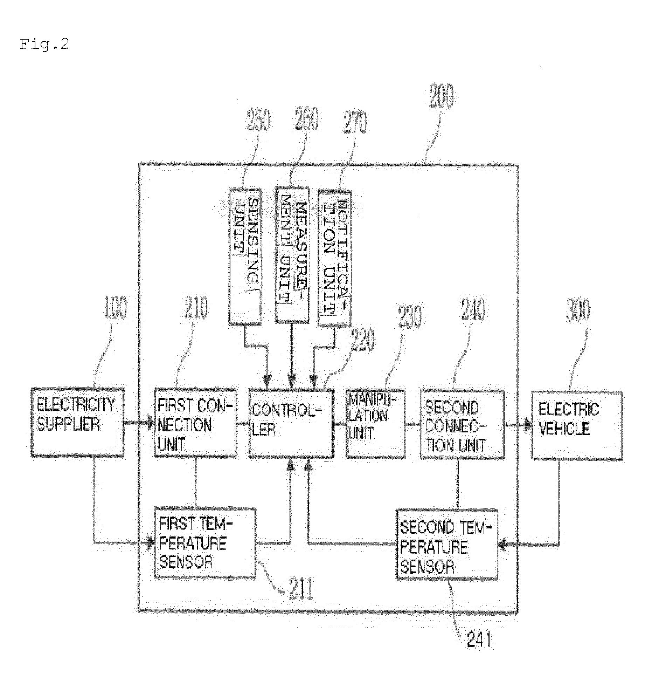

As illustrated in FIG. 2, the charging device 200 may include a first connection unit 210 electrically connected to the electricity supplier 100, a controller 220 for controlling an operation corresponding to charging control conditions and communication with the operator server 500, a manipulation unit 230 manipulated to perform operations from start and end of charging, and a second connection unit (coupler) 240 electrically connected to the electric vehicle 300, and the connection units 210 and 240, the controller 220, and the manipulation unit 230 are connected with one another through an electric line and a data transmission line.

The charging device 200 according to the present invention may further include a sensing unit 255 for sensing the electricity supplier 100 and a measurement unit 260 for measuring the charging electricity quantity and the supply power of the electricity supplier so as to be controlled by the controller 220.

The first connection unit 210 may include a first temperature sensor 211 for sensing a temperature of the electricity supplier 100, and the second connection unit 240 may include a second temperature sensor 241 for sensing a temperature of a charging slot of the electric vehicle 300.

The first temperature sensor 211 included in the first connection unit 210 senses overload of the electricity supplier 100, that is, the temperature of the outlet. More specifically, if there is an overload on the outlet, the temperature abnormally increases and a load switch (a fuse box) is interrupted, resulting in destruction of the electric line. Thus, if the overload is sensed, a sensing value is processed by the controller 220 and charging is controlled according to the processing result.

The second temperature sensor 241 included in the second connection unit 240 senses an abnormal temperature increase if there is overload on the charging slot of the electric vehicle 300, and the controller 220 processes the sensing value, such that charging is controlled according to the processing result.

The charging control program based on the temperature is selectively stored in the controller 220 of the charging device 200 or the operator server 500, and selectively, is driven by the controller 220 or the operator server.

The controller 220 receives and processes the sensing values of the first temperature sensor 211 and the second temperature sensor 241, and controls charging if the processing results satisfy charging control conditions. Herein, the charging control conditions may include a condition for completely terminating charging, a condition for suspending charging, a condition for adjusting a charging current quantity, and so forth.

The condition for completely terminating charging corresponds to a case where the temperature excessively increases and thus a high risk is expected. The condition for suspending charging corresponds to a case where charging is stopped for a predetermined time and is resumed. The condition for adjusting a charging current quantity corresponds to a case where charging is controlled to a quantity lower than a charging electricity quantity desired by the vehicle owner. Such determinations are made based on a result of comparing a normal temperature range of the electricity supplier 100 with an actual sensing temperature when the normal temperature range is stored and managed.

The charging current quantity adjustment is performed by associating the maximum charging electricity quantity information included in the ID of the electricity supplier 100 with the temperature of the electricity supplier 100 and the temperature of the charging slot of the electric vehicle 300.

The foregoing conditions and corresponding charging control may be configured variously in addition to the described types.

Meanwhile, as described above, charging control may be performed in the operator server 500. In this case, if the temperature of the electricity supplier 100 and the temperature of the charging slot of the electric vehicle 300, which are sensed by the first temperature sensor 211 of the first connection unit 210 and the second temperature sensor 241 of the second connection unit 240, are processed by the controller 220, these processing values (sensing temperatures) are transmitted to the operator server 500 through a wired/wireless communication network and then are processed, after which a charging control signal is transmitted to the controller 220 and charging is controlled according to the control signal.

The charging control result is transmitted to the operator server 500, which shares the charging control result with the billing server 400 to estimate a charging fee and stores the estimated charging fee, allowing a customer to search a charging history.

The manipulation unit 230 is, for example, of a button type or a push type, and is provided between the controller 220 and the connection unit 240 connected to the electric vehicle 300, such that if an electric connection between the electricity supplier 100 and the electric vehicle 300 is made, manual manipulation becomes possible.

The manipulation unit 230 is manipulated such that a notification such as "Connected for Charging", "During Charging", "Charging Completed", or the like may be processed by the controller 220 and then output to outside.

The charging device 200 may include a lamp, a speaker, and the like to recognize electric connection between the electricity supplier 100 and the electric vehicle 300, and a charging process and charging completion of the connected electric vehicle 300 and to notify the electric vehicle owner of electric connection, the charging process, and the charging completion. The charging device 200 transmits to the operator server 500, electricity supplier information, charging electricity quantity information, charging device information, and electric vehicle information for reasonable rate estimation based on a charging electricity quantity and data necessary for rate estimation.

Meanwhile, setting of the charging device 200 according to the present invention may use a long-distance communication module such as code division multiple access (CDMA), GSM (global system for mobile communications), 3^{rd}-Generation (3G), 4^{th}-Generation (4G), Long Term Evolution (LTE), and the like, or may use a Bluetooth module such as Wi-Fi, ZigBee, RF, infrared communication, and the like.

Setting of the charging device 200 may use both of retrieving data from the operator server 500 and retrieving data from other terminals such as a smartphone and so forth.

The charging device 200 configured as described above stores and manages charging information such as connected electricity supplier information, charging device information, charging electricity quantity measurement, and the like, and transmits the information to the operator server 500.

The billing server 400 separately charges the owner of the electricity supplier and the operator server, for example, the server of the power company, an estimated rate of an electricity quantity consumed by an electricity supply unit, that is, the electricity supplier, and an estimated rate of an electricity quantity consumed by an electricity demand unit, that is, the charging device, based on the electricity supplier information, the charging electricity quantity information, the charging device information, and the electric vehicle information transmitted from the operator server 500.

That is, the billing server 400 charges the owner of the electricity supplier the estimated rate of a normal electricity quantity out of a total electricity quantity used through the electricity supplier, and charges the operator the estimated rate of the charging electricity quantity of the electric vehicle.

As described above, upon receiving the estimated rate of the charging electricity quantity of the electric vehicle 300 from the billing server 400, the operator server 500 charges the owner of the charging device the estimated rate.

The operator receives payment of the rate charged by the power company from the owner of the charging device, and a cost transferred to the power company complies with a separately defined rule.

It has been described above that if the electricity supplier information is sensed by the charging device 200, the operator server 500 receives and processes the electricity supplier information and then transmits the electricity supplier information to the billing server 400, but the present invention is not limited to the description.

For example, the electricity supplier information sensed by the charging device 200 may be transmitted to the operator server 500 and the billing server 400 at the same time, and the operator server 500 may receive the estimated rate from the billing server 400 and charge the owner of the charging device the estimated rate.

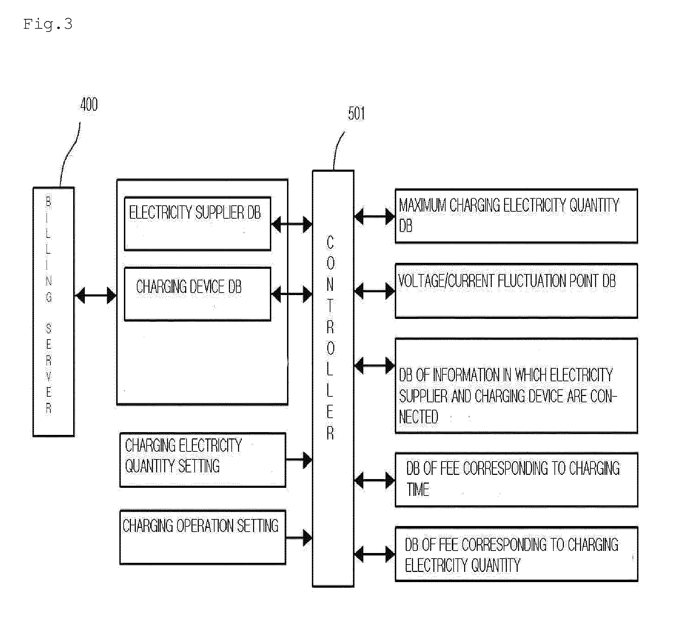

FIG. 3 illustrates a structure of the operator server 500 in which after an electricity supplier database (DB) and a charging device DB are initially registered and managed, they are updated according to changes in subscribers (the electricity supplier and the charging device), and these DBs are stored and managed in association with the billing server 400.

The operator server 500 has a charging electricity quantity auto setting function capable of remotely adjusting a charging electricity quantity to cope with a power supply state corresponding to areas of the country and time.

This function is intended to prevent a charging interruption situation that may occur due to weak power as well as an unexpected country-wide blackout situation, because an electricity supply capacity may differ from electricity supplier to electricity supplier in the areas. For example, once the measurement unit 260 of the charging device 200 measures a maximum electricity quantity that may be stably supplied to the electric vehicle 300 from the electricity supplier 100, the charging device 200 receives this information and is controlled for charging within a range of this electricity quantity.

More specifically, when charging is performed by gradually increasing the electricity quantity, a charging power quality degradation point occurs in which voltage/current falls or fluctuates in specific current, this point is found, and a corresponding electricity quantity is charged, thus preventing the charging interruption situation.

If for charging, two or more charging devices are connected to one electricity supplier at the same time or with a predetermined time interval therebetween, the charging quality of one or more electric vehicles connected thereto may degrade. Thus, the operator server 500 has a function of remotely setting a charging electricity quantity for each connector of the electricity supplier 100, and a sum of charging electricity quantity should not exceed the maximum charging electricity quantity that may be supplied by a corresponding electricity supplier.

The charging quality degradation may occur when one charging device is connected to each of two electricity suppliers, respectively, that is, when the charging devices are connected to the one or more electricity suppliers connected to the same electric line, respectively, as well as when the one or more charging devices are connected to one electricity supplier.

For example, outlets installed in a parking space are mostly connected to the same electric line, such that if an electric vehicle or another electric product is electrically connected to one or more outlets, power is accordingly weakened and thus quality degrades.

The operator server 500 stores and manages, in DBs, conditions in which charging is performed, such as the voltage and current fluctuation point, the number of charging devices connected to one electricity supplier, the number of charging devices connected to one or more electricity suppliers, and the like, and upon connection of the charging device 200, the operator server 500 controls charging within a limited charging electricity quantity range based on such stored and managed information, thereby preventing charging quality degradation.

As such, the information determined by the operator server 500 is transmitted to the charging device 200 for charging under newly set conditions.

To be more specific, electric vehicle charging is remotely controlled based on a power supply and demand state of a power company, a target electric vehicle, time, an area, a vehicle manufacturer, and a previously charged power quantity, thus preventing a power shortage to an area and the whole country due to the simultaneous charging of a number of electric vehicles. If a new charging situation occurs in a plurality of outlets connected to the same electric line, a charging electricity quantity is distributed to simultaneously charge a plurality of electric vehicles to prevent power failure corresponding to overload, and the like.

This function may be provided by information exchange between a power company and an operator.

For example, since the power company recognizes a power supply and demand state in real time, the power company shares the power supply and demand state of an area where an electricity supplier is installed with the operator in real time, such that the operator transmits a control signal to a charging device to control charging.

For example, assuming that 100 electricity suppliers, each having two connectors, are installed over all areas of

Seoul and a normal electricity consumption estimated quantity out of a total one million (1000000)kw supply power on March 25, 2014 is eight hundred thousand (800000)kw, then two million (200000)kw is estimated as power to be used for electric vehicle charging and thus is distributed to the 100 electricity suppliers installed in Seoul in proportion to a preset maximum electricity quantity.

Instead of differentiating the normal electricity consumption estimated quantity and the electric vehicle charging electricity quantity, a normal electricity consumption state and electric vehicle charging electricity consumption state may be collectively determined in real time to adjust the charging electricity quantity within a range that does not affect normal electricity consumption.

Moreover, since information indicating whether charging is performed through an electricity supplier is transmitted to the operator in real time, it is determined based on the information whether electricity suppliers performing simultaneous charging are connected to the same electric line and a charging electricity supply quantity may be set specifically for each electricity supplier. If the electricity suppliers are not connected to the same electric line, a charging electricity supply quantity may be set specifically for a building or an area where each electricity supplier is installed.

In addition, by considering that a utility fee may be estimated differently according to a charging time and a charging electricity quantity, the present invention may provide a charging operation condition setting function for performing charging according to a charging start time and a charging complete time that are set when a charging device to which an electric vehicle is connected is connected to an electricity supplier.

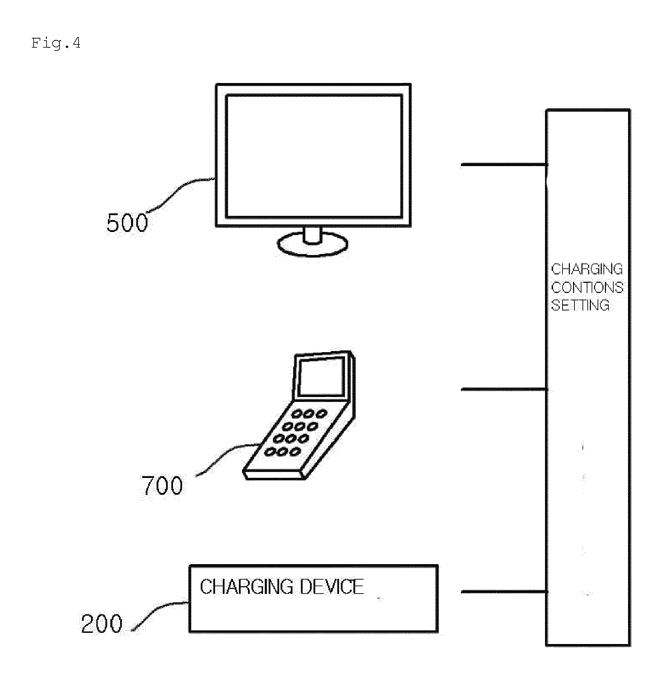

That is, as illustrated in FIG. 4, if a condition is set via any one of a user's smart phone, a homepage of an operator, and a charging device, the set information is determined by the charging device and charging is performed based on the set information.

More specifically, considering that an electricity rate estimation criterion differs with a charging time for which charging is performed, for reasonable rate estimation based on such information, the operator server 500 stores and manages the information. For example, an estimated fee DB considering both a charging time and a charging electricity quantity and an estimated fee DB considering either the charging time or the charging electricity quantity, in an operator's homepage are respectively stored and managed to start charging after a time-specific fee, a consumption-specific fee, and a basic fee are checked. Further, the fee is accurately estimated according to a condition where both the charging time and the charging electricity quantity are selected or a condition where one of the charging time and the charging electricity quantity is selected.

According to such a function, the charging device is maintained connected to the electricity supplier, and at a preset time at which the fee is low, charging is started. This function may be useful when the immediate use of the vehicle is not required and when the fee savings are required.

The present invention also provides a charging operation setting function for charging only a part of a total charging electricity quantity for the electric vehicle and charging the remaining part at a preset point (in time).

More specifically, if a charging electricity quantity for a predetermined electric vehicle is 20kw, for example, the vehicle is charged with 10kw upon connection of the charging device to the electricity supplier, and charging is resumed at a preset time to complete charging of the remaining 10kw.

Such a function considers a case where a power rate is estimated differently according to a charging time, wherein the user's cost burden may be alleviated if the immediate use of the vehicle is not required.

Once charging is performed in the normal situation or the specially set condition as described above, the operator charges the owner of the vehicle only an estimated fee for an electricity quantity consumed for charging, and a part of the charged rate, which is agreed between the operator and the power company, is paid to the power company, for fee processing.

As described above, the system according to the present invention allows the electric vehicle requiring charging to freely use any electricity supplier managed by the operator while enabling reasonable fee estimation. This is possible by registering and managing an electricity supplier installed for charging according to the present invention, as well as the use of normal electricity, and a meter (for example, a power company billing meter's identification number) connected to the electricity supplier in the operator server 500 in advance and by estimating a fee separately for an electricity quantity consumed for electric vehicle charging and a normal-consumption electricity quantity.

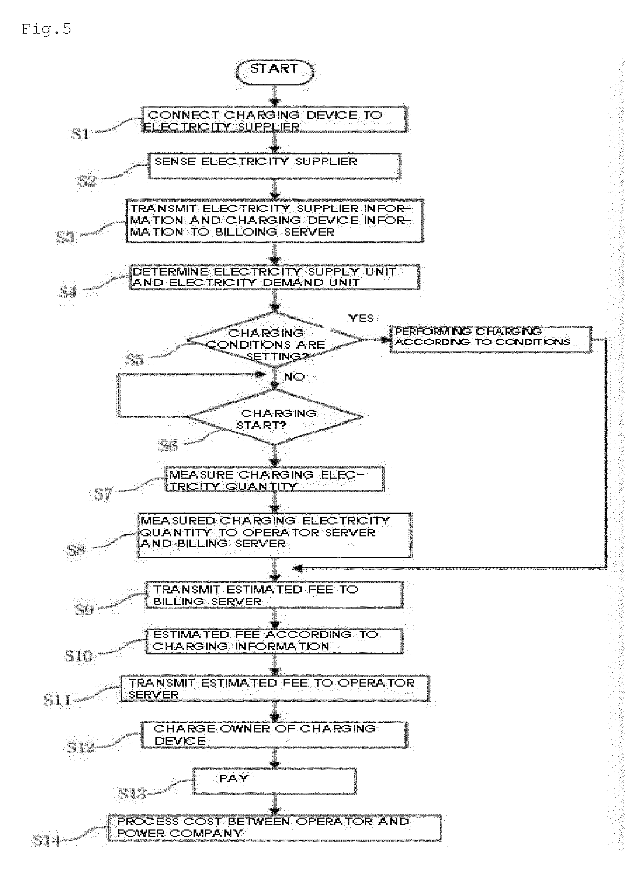

A charging operation flow according to the present invention will be described with reference to FIG. 5.

Once the charging device 200 is connected to the electricity supplier 100 in operation S1, information of the electricity supplier 100 (substantially, an identification mark such as an RF, a barcode, or the like) is sensed by the sensing unit 250 of the charging device 200 in operation S2.

The sensed information of the electricity supplier 100 is transmitted from the charging device 200 to the operator server 500 in operation S3, and the operator server 500 identifies an electricity supply unit based on the information received from the charging device 200 in operation S4. The information of the charging device 200 is also transmitted to the operator server 500 to identify an electricity demand unit. This state is a charging start possible condition.

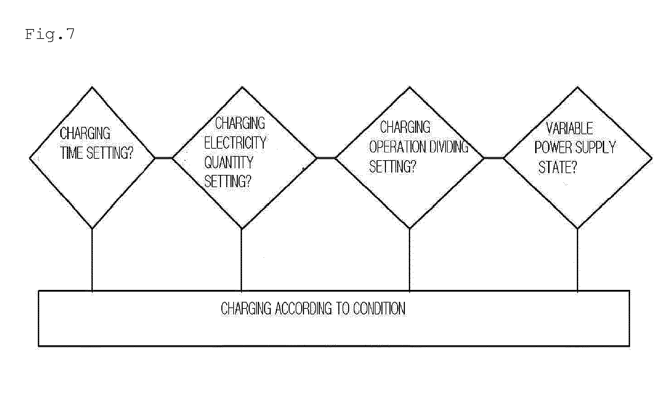

Thereafter, as illustrated in FIG. 7, it is determined whether all of several charging conditions are set or some of them are selectively set in operation S5.

As a result of the determination, if the charging conditions are set, the operator server 500 recognizes the set conditions for charging and fee estimation according to the set conditions; otherwise, the operator server 500 performs a control operation for normal charging and fee estimation.

It is determined whether charging is initiated through the manipulation unit 230 of the charging device 200 in operation S6. If charging is initiated, charging is performed while measuring a charging electricity quantity by using the measurement unit 260, in operation S7.

Once charging is completed, the measured charging electricity quantity is transmitted from the charging device 200 to the operator server 500 in operation S8, and the operator server 500 transmits, to the billing server 400, charging information in which electricity supplier information processed by the controller 220 is associated with the measured charging electricity quantity, in operation S9.

Thus, the billing server 400 estimates a fee based on the charging information transmitted from the operator server 500 in operation S10, and transmits the estimated fee to the operator server 500 in operation S11.

The operator server 500 charges the owner of the charging device the estimated fee transmitted from the billing server 400 in operation S12 to request the owner of the charging device to pay the estimated fee in operation S13.

Once the owner of the charging device 200 completes payment, the operator processes the fee as agreed with the power company in operation S14.

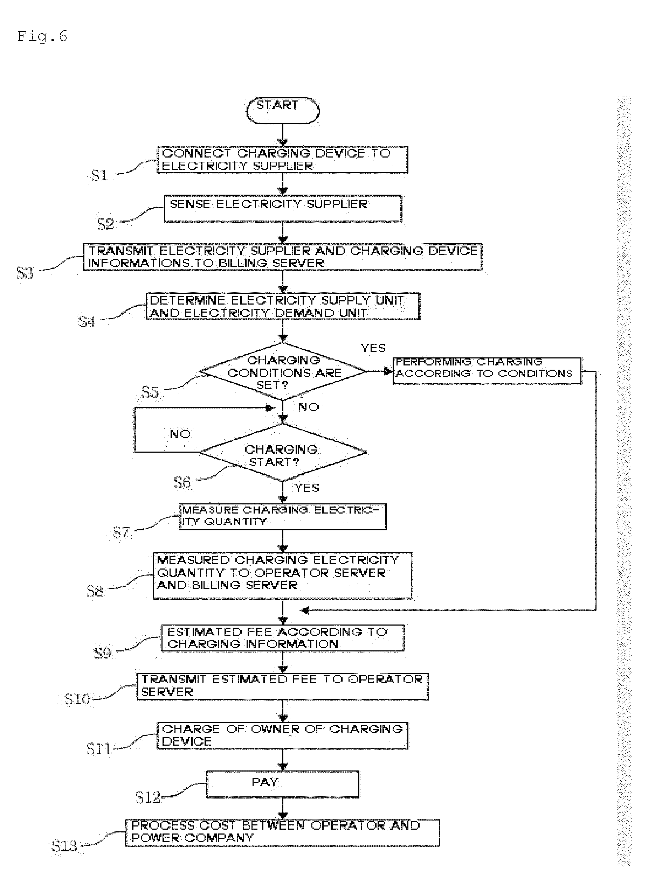

FIG. 6 is a flowchart that is similar to the operation flow of FIG. 5 except that the measured charging electricity quantity is transmitted to the billing server and the operator server at the same time. That is, when the electric vehicle is charged, the measured charging electricity quantity is directly transmitted to the billing server from the charging device for fee estimation and payment between the operator and the power company. These operations are possible as electric vehicle information is shared among the operator server, the billing server, and the electricity supplier.

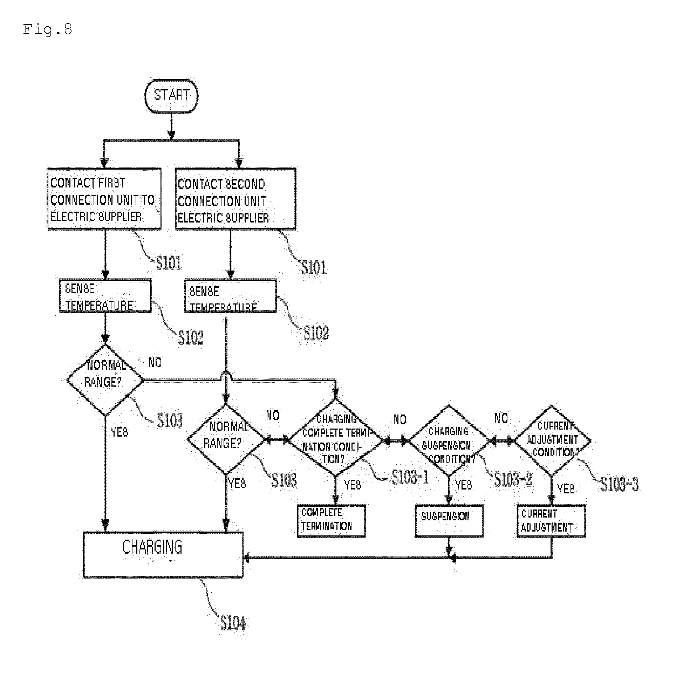

With reference to FIG. 8, a description will be made of a charging control operation with respect to a temperature according to the present invention.

For charging of the electric vehicle 300, the first connection unit 210 of the charging device 200 contacts the electricity supplier 100 and at the same time, the second connection unit 240 contacts a charging slot of the electric vehicle in operation S101.

Thus, the temperature of the electricity supplier 100 is sensed by the first temperature sensor 211 included in the first connection unit 210, and the temperature of the charging slot of the electric vehicle is sensed by the second temperature sensor 241 included in the second connection unit 240 in operation S102.

It is determined whether the sensed temperature of the electricity supplier 100 and the sensed temperature of the charging slot of the electric vehicle are processed by the controller 220 of the charging device 200 to determine whether they are in a normal range, in operation S103.

If it is determined that both the temperature of electricity supplier 100 and the temperature of the charging slot of the electric vehicle are in a normal temperature range, normal charging is performed in operation S104.

If it is determined that both or one of the temperature of the electricity supplier 100 and the temperature of the charging slot of the electric vehicle are out of the normal temperature range, it is determined whether the sensed temperature corresponds to the condition for completely terminating charging, the condition for suspending charging, or the condition for adjusting a charging current quantity in operation in operation S103-1, S103-2, or S103-3. The determination may be made in a single operation, or complete termination, suspension, and current adjustment may be sequentially determined according to a determination result.

In case of the charging complete termination condition or charging suspension condition based on the determination result, such information is notified to the vehicle owner through a visual or audible means provided in the charging device 200 to terminate charging, and is also transmitted to the smart phone of the vehicle owner through communication with the operator server 500. In case of the charging suspension condition, it is continuously determined whether both of or one of the temperature of the electricity supplier 100 and the temperature of the charging slot of the electric vehicle corresponds to the charging complete termination condition or the charging current adjustment condition to terminate charging for a predetermined time and resume the charging.

Also for the charging current adjustment condition, the condition is notified to the vehicle owner and it is continuously determined whether both of or one of the temperature of the electricity supplier 100 and the temperature of the charging slot of the electric vehicle corresponds to the charging complete termination condition or the charging suspension condition while charging is performed.

While not shown, if a charging control program corresponding to the temperature is stored in the operator server 500, the operator server 500, in place of the controller 220 of the charging device 200, performs a charging control function based on the temperature of the electricity supplier 100 and the temperature of the charging slot of the electric vehicle.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A billing system for electric vehicle charging, the billing system comprising:
an electricity supplier for supplying electricity;
a charging device for charging an electric vehicle through the electricity supplier;
the electric vehicle charged by the charging device;
a billing server for estimating a fee separately for a normal-consumption electricity quantity and a charging electricity quantity, out of a total electricity quantity consumed through the electric supplier;
an operator server for storing and managing information regarding the electricity supplier and the charging device, receiving a charging electricity quantity of the electric vehicle from the charging device and transmitting the charging electricity quantity to the billing server, receiving an estimated fee of the charging electricity quantity from the billing server and charging an owner of the charging device the estimated fee, and processing a cost with a power company; and
a payment server for receiving payment of the estimated fee of the charging electricity quantity from the owner of the charging device.

2. The billing system of claim 1, wherein the charging device comprises:
a first connection unit electrically connected to the electricity supplier and including a temperature sensor therein;
a sensing unit for sensing the electricity supplier;
a measurement unit for measuring the charging electricity quantity and supply power of the electricity supplier;
a controller for controlling an operation corresponding to a charging control condition and communication with an operator server;
a manipulation unit manipulated for performing an operation from start of charging to completion of charging; and
a second connection unit electrically connected to the electric vehicle and including a temperature sensor therein,
wherein power supplied from the power supplier is measured and a measurement value is transmitted to the operator server, and thus a charging electricity quantity is automatically set for each electricity supplier under control of the operator server.

3. The billing system of claim 1, wherein the operator server shares, with the power company, power supply and demand situation information regarding a building or an area where the electricity supplier is installed, and distributes the charging electricity quantity to each electricity supplier in real time.

4. The billing system of claim 1, wherein the electricity supplier information is extracted and determined by the operator server in association with a unique identifier (ID).

5. The billing system of claim 1, wherein the operator server comprises a charging electricity quantity auto setting function and a charging condition setting function, and comprises a maximum charging electricity quantity database (DB), a voltage and current fluctuation point DB, a DB of information in which the electricity supplier and the charging device are connected, a DB of a fee corresponding to a charging time, and a DB of a fee corresponding to a charging electricity quantity.

6. The billing system of claim 4, wherein the charging conditions comprise a charging time, a charging electricity quantity, a charge start time, charging suspension, a charging resume time, and a power supply and demand situation shared between an operator and the power company.

7. The billing system of claim 6, wherein the charging conditions are set via any one of a homepage of the operator, a smart phone, and the charging device.

8. A billing system for electric vehicle charging, the billing system comprising:
an electricity supplier for supplying electricity;
a charging device for charging an electric vehicle through the electricity supplier, wherein the charging device stores and manages electricity supplier information and transmits a charging electricity quantity of the electric vehicle to an operator server and a billing server;
the electric vehicle charged by the charging device;
a billing server for estimating a fee separately for a normal-consumption electricity quantity and a charging electricity quantity, out of a total electricity quantity consumed through the electric supplier;
an operator server for receiving an estimated fee of the charging electricity quantity from the billing server and charging an owner of the charging device the estimated fee, and processing a cost with a power company; and
a payment server for receiving payment of the estimated fee of the charging electricity quantity from the owner of the charging device.

9. The billing system of claim 8, wherein the charging device comprises:
a first connection unit electrically connected to the electricity supplier and including a temperature sensor therein;
a sensing unit for sensing the electricity supplier;
a measurement unit for measuring the charging electricity quantity and a supply power of the electricity supplier;
a controller for controlling an operation corresponding to a charging control condition and communication with an operator server;
a manipulation unit manipulated for performing an operation from start of charging to completion of charging; and
a second connection unit electrically connected to the electric vehicle and including a temperature sensor therein,
wherein power supplied from the power supplier is measured and a measurement value is transmitted to the operator server, and thus a charging electricity quantity is automatically set for each electricity supplier under control of the operator server.

10. The billing system of claim 8, wherein the operator server shares, with the power company, power supply and demand situation information regarding a building or an area where the electricity supplier is installed, and distributes the charging electricity quantity to each electricity supplier in real time.

11. The billing system of claim 8, wherein the electricity supplier information is extracted and determined by the operator server in association with a unique identifier (ID).

12. The billing system of claim 8, wherein the operator server comprises a charging electricity quantity auto setting function and a charging condition setting function, and comprises a maximum charging electricity quantity database (DB), a voltage and current fluctuation point DB, a DB of information in which the electricity supplier and the charging device are connected, a DB of a fee corresponding to a charging time, and a DB of a fee corresponding to a charging electricity quantity.

13. The billing system of claim 10, wherein the charging conditions comprise a charging time, a charging electricity quantity, a charge start time, charging suspension, a charging resume time, and a power supply and demand situation shared between an operator and the power company.

14. The billing system of claim 12, wherein the charging conditions are set via any one of a homepage of the operator, a smart phone, and the charging device.
